# EUROPÄISCHE PATENTSCHRIFT

(11) **EP 1 704 770 B1**
(45) Veröffentlichungstag und Bekanntmachung des Hinweises auf die Patenterteilung: **01.04.2009**
(21) Anmeldenummer: 06075308.4
(22) Anmeldetag: 13.02.2006
(51) Int. Cl.: A01G 9/02

(54) **Pflanzenkastenturm**
Cultivation tower
Tour de culture

(30) Priorität: 24.03.2005 DE 202005005193 U; 04.07.2005 DE 202005010719 U
(43) Veröffentlichungstag der Anmeldung: 27.09.2006
(73) Patentinhaber: Behrens Blechbearbeitung, 12359 Berlin (DE)
(72) Erfinder: Arens-Fischer, Michael, 12247 Berlin (DE)
(74) Vertreter: Kietzmann, Manfred

(56) Entgegenhaltungen:
- EP-A- 0 958 736
- FR-A- 2 733 117
- US-A- 3 293 798
- US-A- 5 309 671

## Beschreibung

Die Erfindung betrifft eine Kulturkastenanlage, bei der die Pflanzkästen turmartig aufgestellt und individuell bepflanzbar sind.

Derartige Pflanzkastentürme sind bekannt. In der US-A-3,293,798 wird eine vertikale Pflanzeinrichtung mit gestuften Pflanzabschnitten beschrieben, die eine kreisförmige, flache, pfannenförmige Basis umfasst, die in eine entsprechende Ausnehmung im Boden positioniert ist. Ein kreisförmiger Bodenabschnitt ist mit der Basis verschachtelt und ruht mit seiner Bodenwand auf einer horizontalen Abdeckung, die an der Seitenwand des Basisabschnitts befestigt ist. Eine aufrechte, vertikal verlängerte Stütze ist innerhalb der Basis angebracht. Innerhalb der Basis ist ein pfannenförmiger Bodenabschnitt verschaltet. Der Bodenabschnitt umfasst eine Bodenwand mit einer Öffnung, welche die Stütze aufnimmt, und ist an der Seitenwand der Stütze befestigt. Eine Vielzahl an pfannenförmigen Abschnitten, ähnlich dem Bodenabschnitt, ist um die Stütze herum befestigt. Der untere Teil der Seitenwand jeder der Abschnitte ist perforiert, damit Feuchtigkeit in kontrollierter Weise durch die Seitenwandperforation austreten und auf die Umfangteile des darunter liegenden Beets fallen kann. Der untere Teil jedes Abschnittes ist mit einem porösen Material gefüllt, auf dem Erde aufgetragen wird. Die Abmessungen der Abschnitte werden so ausgewählt, dass die Seitenwände der nachfolgenden Abschnitte radial beabstandet sind, so dass zwischen dem oberen Rand des unteren Abschnitts und der Seitenwand des nachfolgenden Abschnitts ein Beet zur Aufnahme von Sprossen geschaffen wird.

In der FR-A-2.733.117 wird ein Kulturturm offenbart, der eine Vielzahl an Kästen umfasst, die aufeinander in der Richtung der Höhe des Turms folgend und auf einem steifen Träger befestigt werden. Der steife Träger besteht aus drei sich vertikal erstreckenden geradlinigen Ständern, die in regelmäßigen Abständen entlang der Wand der Struktur angeordnet sind. Jeder Ständer besteht aus derselben Anzahl an Profilen, die ineinander in der Richtung der Höhe der Struktur eingreifen, wobei jedes Profil eine seitliche Haltevorrichtung umfasst, um eine Kulturstruktur aufzunehmen und darauf folgende Kulturstrukturen in einem gewünschten Abstand voneinander zu halten. Der Kulturturm, der in FR-A-2.733.117 offenbart wird, ist dazu gedacht, eine große Anzahl an kleinen Gemüsepflanzen, kleinen Pflanzen und Kräutern auf einer kleinen Bodenfläche zu pflanzen.

Die EP 1 077 597 B1 beschreibt eine interne Aufbauvorrichtung zum Herstellen einer Kultur aus einer Vielzahl kleinerer Kulturen, wobei die Vorrichtung folgendes umfasst:
einen Tragständer, der sich in Richtung der Höhe der Vorrichtung erstreckt,
eine Vielzahl übereinander gestapelter Gefäße, die um den Tragständer angebracht und ineinander verschachtelt sind, wobei die Gefäße ein zentrales Lagervolumen für Erde und Pflanzen bereitstellen und eine im Wesentlichen offene obere Fläche aufweisen, sowie
   Haltemittel für jedes Gefäß,
   wobei ein Gefäß in der Vorrichtung unten eine Seitenwand und eine obere Fläche mit einer Oberflächenzone aufweist und ein nächstes Gefäß eine Seitenwand und eine Bodenfläche mit einer Oberflächenzone aufweist, wobei die Oberflächenzone der oberen Fläche des Gefäßes unten größer ist als die Oberflächenzone der Bodenfläche des folgenden Gefäßes, so dass zwischen den Seitenwänden der beiden Gefäße ein Raum zur Aufnahme von Pflanzen besteht. Dabei ist das Gefäß ein Kasten mit einer Seitenwand und einer offenen Bodenfläche, die Mittel zum Halten jedes Kastens Verbindungsmittel zum Verbinden der Seitenwand des Kastens mit dem Tragständer umfassen, und die mittleren Lagervolumina der aufeinander folgenden Kästen miteinander verbunden sind.

Ferner ist in der EP-A-0958736 ein Pflanzkastenturm offenbart, der aus übereinander gestapelten Pflanzkästen mit einem sich nach unten verjüngendem Querschnitt besteht, wobei jeder Pflanzkasten in nach oben offene Segmente unterteilt ist.

Jedes Segment verfügt über einen Boden und die Seitenwände der Segmente verbinden einen zentralen Kanal mit dem Mantel. Der Boden weist eine Öffnung zum Wasserdurchtritt auf. Ferner sind Befestigungsmittel angeordnet über die jeweils zwei übereinander befindliche Pflanzkästen in Verbindung stehen. Der unterste Pflanzkasten ist auf einem Fuß gelagert.

Diese zum Stand der Technik gehörenden Pflanzkastentürme weisen je nach konkreter Ausbildung Nachteile auf.

Zum einen stehen nur begrenzte Pflanzräume zur Verfügung, die bei warmer Witterung schnell zum Austrocknen neigen.

Ein Vergrößern der Pflanzräume durch Verwendung von Pflanzschalen oder -kästen die nur noch eine Mantelfläche aufweisen, geht zu Lasten der Händelbarkeit der Pflanztürme. Eine Reduzierung des Herstellungsaufwandes ist zwar durch die Verwendung gleichgroßer Pflanzschalen oder - kästen möglich, schränkt aber die optischen Möglichkeiten und die Variabilität ein. Darüber hinaus kommen bei den bekannten Pflanzkastentürmen eine Reihe von Einzelteilen zur Anwendung, was sowohl die Herstellungskosten als auch die Montagekosten in die Höhe treibt.

Aufgabe der Erfindung ist es deshalb, einen Pflanzkastenturm vorzuschlagen, der gut händelbar ist, dessen einzelne Pflanzkästen technologisch kostengünstig herstellbar sind und durch deren Verbindung eine optimale Wasserversorgung der Bepflanzung gewährleistet wird.

Gelöst wird diese Aufgabe mit den Merkmalen des Anspruches 1, vorteilhafte Ausgestaltungen sind Gegenstand der Unteransprüche.

Bei einem Pflanzkastenturm gemäß dem Oberbegriff des Anspruches 1 ist vorgesehen, dass die Pflanzkästen bestehen aus beidseitig an den Kanalkanten zur Bildung der Seitenwände abgewinkelten trapezförmigen Blechen, wobei benachbarte Bleche an den Seitenwänden unter Bildung des Kanals miteinander verbunden sind, aus einer den Mantel bildenden Verbindung der Außenkanten der Seitenwände und jeweils einem Boden.

Die Mittelabschnitte der zusammengesetzten trapezförmigen Bleche bilden dabei einen Kanal, der sich durch den gesamten Turm bis zum Fuß zieht. Der Umfang des Kanals sollte sich vom oberen Pflanzkasten zum untersten Pflanzkasten hin vergrößern, vorzugsweise in ähnlicher oder gleicher Proportion wie sich der Außenumfang der Pflanzkästen verändert.

In einer vorteilhaften Ausführung wird die formschlüssige Verbindung zwischen zwei Seitewänden durch einer Steckverbindung gebildet, bestehend aus einer Außenfalz der Oberkante der einen Seitenfläche und einer Außenfalz der Unterkante der anderen Seitenfläche. Bevorzugt wird die Falz jeweils durch eine Biegung der jeweiligen Kante um 180° hergestellt und der gerade Teil der jeweiligen anderen Seitenfläche greift in die Falz.

Von Vorteil für die Montage ist es, wenn die Falzhöhe (h) an der Unterkante höher ist als an der Oberkante.

Zur Befestigung des Bodens weist die Falz der Unterkante eine oder mehrere Unterbrechungen auf für die Anordnung der Auflage(n) des Bodens.

Zu Sicherungszwecken kann ein lösbarer Sicherungsstift zwischen den zusammengefügten Seitenwänden angeordnet sein.

Der unterste Pflanzkasten ist auf einem Fuß gelagert. Dieser Fuß verfügt in einer vorteilhaften Ausführung über ein oder mehrere nach oben weisende Befestigungselemente, die bevorzugt in den Kanal des Pflanzkastens von unten eingreifen und so dessen Verdrehen oder Verschieben gegenüber der Ebene des Fußes verhindern. Natürlich sind auch andere Verbindungen wie Verschrauben denkbar.

Eine weitere Ausgestaltung sieht vor, dass der Fuß palettenartig ausgebildet ist mit Eingriffstaschen für die Gabeln eines Gabelstaplers zum Bewegen. Alternativ oder gleichzeitig kann vom Fuß durch die Kanäle bis über den Kanal des oberen Pflanzkastens hinaus ein Tragseil, ein Tragrohr oder ein Tragblechstreifen geführt sein, der oder das oben eine Oese zum Krantransport aufweist. Nach dem Erreichen des Standortes kann dieses Transportmittel entfernt werden.

Bei einem so ausgebildeten Pflanzkastenturm nimmt der Außenumfang der Pflanzkästen vorteilhafterweise von oben nach unten zu, verbreitert sich der Turm also. Im bepflanzten Zustand bietet der Pflanzturm so einen bergigen oder pyramidenartigen Anblick.

Zur Anwendung kommen vor allem kreisförmige oder rechteckige oder quadratische Pflanzkästen. Möglich sind aber auch andere Formen, wobei dann darauf geachtet werden muss, dass die Standfestigkeit gewährleistet wird.

Bei einem Pflanzkastenturm mit rechteckigen oder quadratischen Pflanzkästen besteht dabei weiterer Gestaltungsspielraum darin, dass die Ecken der übereinander angeordneten Pflanzkästen einer gedachten Gerade (pyramidenartige Anordnung)oder einer gedachten Spirale (schraubenförmige Anordnung) oder einer Kombination daraus folgen.

Die Anzahl der verwendeten Pflanzkästen ist insoweit beschränkt, als der Turm händelbar sein soll, er muss gegossen werden und soll stabil stehen. Vorteilhafter Weise werden Pflanzkastentürme mit 5 bis 12 angeordneten Pflanzkästen eingesetzt.

Die Erfindung soll anhand der Zeichnungen erläutert werden.

Es zeigen:
- Fig. 1:: Pflanzkastenturm 12-teilig,
- Fig. 2:: Draufsicht auf einen Pflanzkasten,
- Fig. 3:: Blech zur Bildung eines Segmentes,
- Fig. 4:: Segmentbildung mit Schnitt AA und Ansicht B und
- Fig. 5:: Anordnung des Tragblechstreifens.

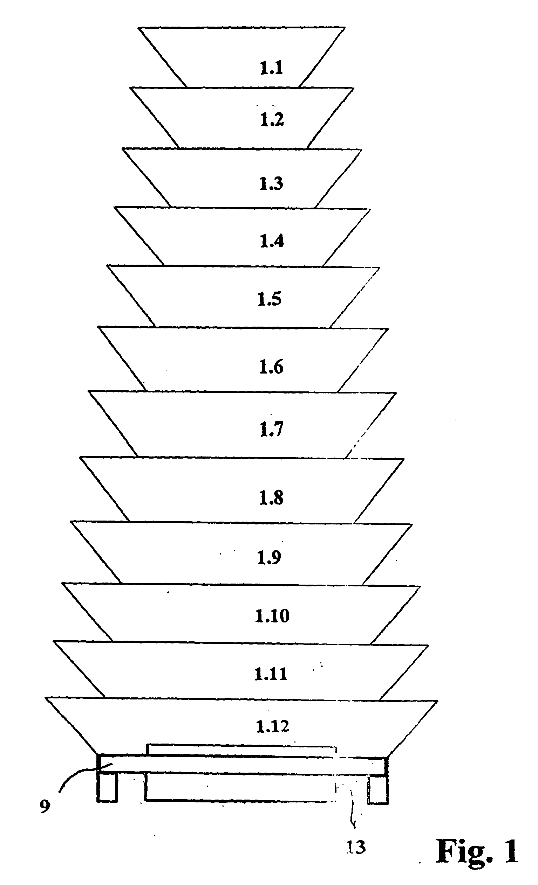

In Fig. 1 ist ein Pflanzkastenturm bestehend aus 12 quadratischen Pflanzkästen 1.1 - 1.12 dargestellt. Der unterste Pflanzkasten ist auf einem Fuß 9 angeordnet, der palettenartig ausgebildet ist und Eingriffstaschen 13 für die Gabeln eines Gabelstaplers aufweist.
Die Pflanzkästen 1.1 - 1.12 weisen einen von oben nach unten sich vergrößernden Außenumfang auf, wobei die gedachte Verbindung der Ecken von oben nach unten eine Gerade ist. Alternativ wäre auch eine Spindel oder eine Kombination von Gerade und Spindel möglich. Die Pflanzkästen 1.1 - 1.11 sind mit dem jeweils darunter liegenden verschiebe- und verdrehsicher verbunden, wobei der obere etwas in den dar unterliegenden Pflanzkasten eingreift, also 1.1 in 1.2; 1.2 in 1.3 und so weiter.

Jeder dieser quadratischen Pflanzkästen 1.1 - 1.12 besteht aus vier Segmenten 3.0 - 3.3 mit jeweils einem Boden 4. Die Segmente 3.0 - 3.3 bilden mittig einen Kanal 6, der mit wasserspeicherndem Material verfüllt ist, so dass dieses Material eine abgestufte durchgehende Säule bildet und als Wasserspeicher dienen kann.

Durch eine Vergrößerung des Kanalquerschnittes bleibt der bepflanzbare Innenquerschnitt der Segmente 3.0 - 3.3 der Pflanzkästen 1.1 - 1.12 trotz größer werdenden Außenumfangs der Pflanzkästen 1.1 - 1.12, egal welcher Ebene, in etwa gleich.

Zur Regelung des Wasserhaushaltes des Pflanzkastenturmes dienen Öffnungen 7 im Boden 4, den Seitenwänden 5 und in den jeweiligen Kanalwänden.

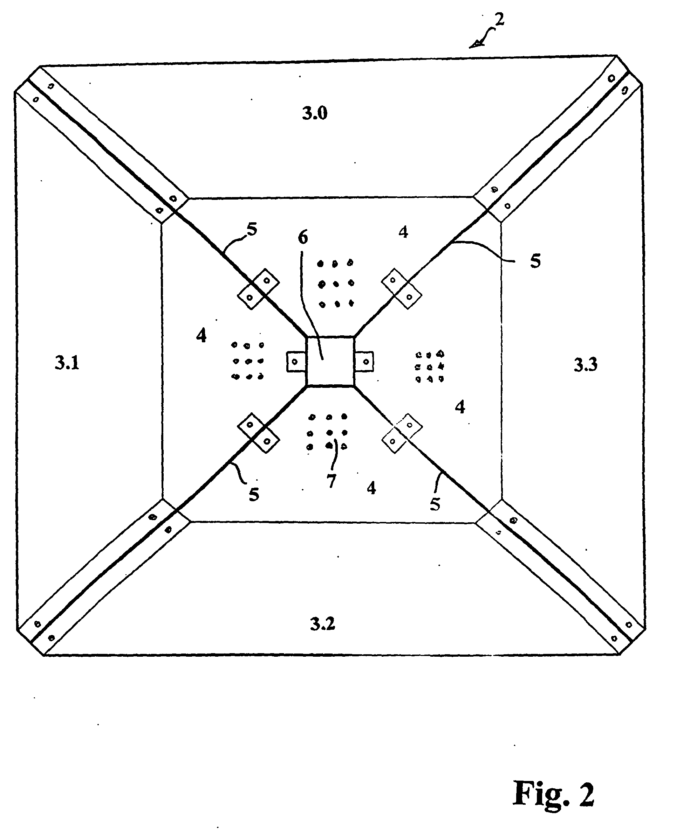

Fig. 2 zeigt in der Draufsicht einen Pflanzkasten 1.1 - 1.12, der quadratisch ausgebildet ist und sich jeweils aus vier Segmenten 3.0 - 3.3 zusammensetzt. Jedes Segment 3.0 - 3.3 verfügt über einen Boden 4 und Seitenwände 5, um die außen der Mantel 2 gelegt und mit diesen verbunden ist. Bei dieser Ausführung ist jedes Segment mit einem Mantelblech versehen, die in der Summe (x4) den Mantel 2 ergeben. Zur Befestigung dienen Winkel oder abgewinkelte Abschnitte der Seitenwände 5. Analog ist auch der jeweilige Boden 4 befestigt.

Mittig in den Pflanzkästen 1.1 - 1.12 befindet sich der Kanal 6, der zu Transportzwecken durch Einbringen eines durchgängigen Tragblechstreifens 10 genutzt werden kann oder er wird nur mit einem wasserspeichernden Material verfüllt und dient als Wasserspeicher.

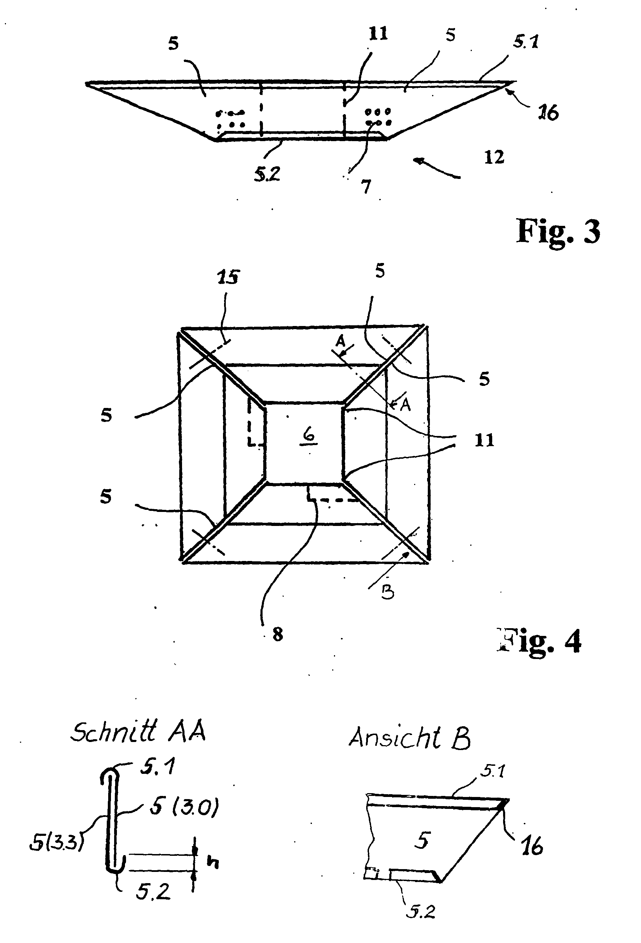

In Fig. 3 ist ein trapezförmiges Blech 12 dargestellt, das zur Herstellung der Segmente 3.0 - 3.3 dient. Trapezförmig soll nicht nur gerade sein, sondern die Trapezseiten können auch gekrümmt sein, was zu einem bauchigen oder hyperboloiden Mantel 2 führt. Das Blech 12 wird für einen quadratischen Pflanzkasten 1.1 - 1.12 an den Kanalkanten jeweils um 45° nach vorn abgekantet. So entstehen die Seitenwände 5. Durch das Verbinden benachbarter Seitenwände 5, wie das in Fig. 4, insbesondere Schnitt AA dargestellt ist, entsteht der Kanal 6.

Die Verbindung der Seitenwände 5 erfolgt durch Formschluss mittels einer Steckverbindung bestehend aus einer Außenfalz der Oberkante 5.1 der einen Seitenfläche 5 und einer Außenfalz der Unterkante 5.2 der anderen Seitenfläche 5,
wobei bevorzugt die Falz jeweils durch eine Biegung der jeweiligen Kante im 180° gebildet ist, und der gerade Teil der jeweiligen anderen Seitenfläche 5 in die Falz greift.

Die Falzhöhe (h) an der Unterkante 5.2 ist höher als an der Oberkante 5.1. Dieser Höhenunterschied gestattet erst das Einsetzen (Einfädeln!) der unteren Kante der einen Seitenwand 5 in die Außenfalz der Unterkante 5.2 der benachbarten Seitenwand 5 und dann folgend das Aufsetzen und Einschieben der Außenfalz der Oberkante 5.1 auf die gerade Kante der Seitenwand 5.

Ein lösbarer Sicherungsstift 15, der durch deckungsgleiche Bohrungen benachbarter Seitenwände 5 geschoben wird, verhindert das gewaltsame Trennen der benachbarten Segmente.

Jetzt muss noch der Mantel 2 und jeweils ein Boden 4 angeordnet werden und ein Pflanzkasten 1.1 - 1.12 ist fertig.

Zur Bodenbefestigung weist die Falz der Unterkante 5.1 Unterbrechungen auf, so dass problemlos z. b. Winkel für die Montage der Böden 4 angeordnet werden können.

Natürlich ist es auch möglich, Mantel 2 und Boden 4 vor dem Zusammensetzen der Segmente 3.0 - 3.3 zu einem Pflanzkasten 1.1 - 1.n zu montieren.

Die Länge der Falz der Oberkante sollte der Länge der Oberkante der Seitenfläche entsprechen, um sowohl einen glatten Abschluss zu gewährleisten als auch den exakten Sitz bereits bei der Montage zu gewährleisten (ohne Sicherungsstift 15). Entsprechend der Mantelneigung ist das um 180° umgebogene Teil der Falz im Mantelbereich vor dem Biegen anzuschrägen (Schräge 16 ≥ Mantelneigung). Das Prinzip ist aus der Ansicht 4B ersichtlich.

Durch Vergrößerung des Blechteiles für den Kanal 6 vergrößert sich auch der Außenumfang des jeweiligen Pflanzkastens 1.1 - 1.12, wobei der zu bepflanzende Querschnitt - nicht das Volumen - gleich bleiben soll.

Am Boden 4 angeordnete Befestigungsmittel 8, die auf die Seitenwände 5 des darunterliegenden Pflanzkastens 1.2 - 1.11 oder dessen Kanalwände greifen, sichern gegen das Verdrehen oder Verschieben der so verbundenen Pflanzkästen in der Pflanzkastenebene.

Das Versenken übereinander angeordneter Pflanzkästen 1.1, 1.2 usw. ineinander lässt sich bezüglich der Tiefe auf einfache Art durch die Breite des Bleches 12 bestimmen. Je geringer diese ist, um so tiefer sinkt der darüber liegende in den darunter liegenden Kasten ein. Ein Versenken muss aber nicht sein.

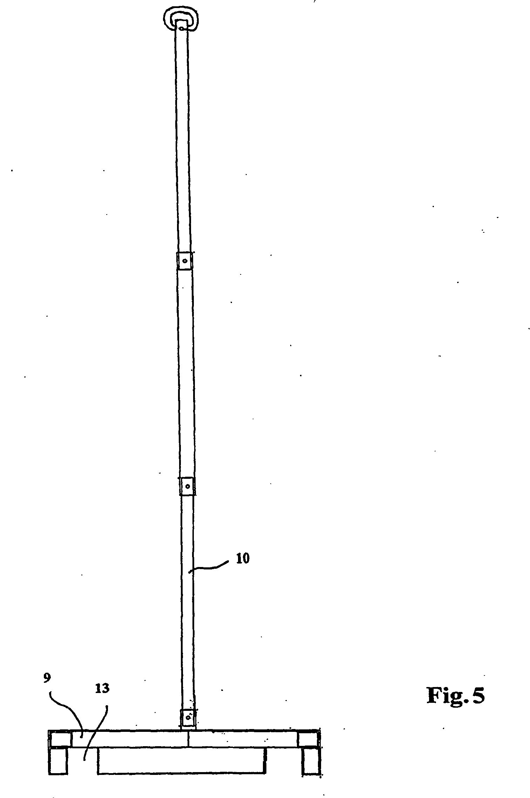

Fig. 5 zeigt einen vom Fuß 9 mit einem durch die Kanäle 6 bis über den Kanal 6 des oberen Pflanzkastens 1.1 hinaus geführten Tragblechstreifen 10, der oben eine Oese zum Krantransport aufweist. Der Tragblechstreifen 10 kann nach dem Transport entfernbar sein.

Bezugszeichenliste
- 0 - 1.n: Pflanzkästen
- 2: Mantel
- 3.0 - 3.3: Segmente jedes Pflanzkastens
- 4: Boden der Segmente
- 5: Seitenwände
- 5.1: Oberkante
- 5.2: Unterkante
- 6: Kanal
- 7: Öffnungen
- 8: Befestigungsmittel
- 9: Fuß
- 10: Tragblechstreifen
- 11: Kanalkanten
- 12: trapezförmiges Blech
- 13: Eingriffstaschen
- 14: Befestigungselement
- 15: Sicherungsstift
- 16: schräge Kante der um 180° gebogenen Oberkante

## Patentansprüche

1. Pflanzkastenturm bestehend aus
- übereinander gestapelten Pflanzkästen (1.1 - 1.n) mit einem sich nach unten verjügendem Querschnitt durch eine geneigt ausgeführte Linie des Mantels (2) des Pflanzkastens (1.0 - 1.n), wobei jeder Pflanzkasten (1.0 - 1.n) in nach oben offene Segmente (3.0 - 3.3) unterteilt ist,
- jedes Segment (3.0 - 3.3) über einen Boden (4) verfügt und die Seitenwände (5) der Segmente (3.0 - 3.3) einen mittig im Pflanzkasten (1.1 - 1.n) angeordneten, von unten nach oben verlaufenden Kanal (6) mit dem jeweiligen Mantel (2) des Pflanzkastens (1.0 - 1.n) verbinden,
- der Boden (4) und/oder die Seitenwände (5) Öffnungen (7) zum Wasserdurchtritt aufweisen,
- im Bodenbereich eines oder mehrer Segmente (3.0 - 3.3) Befestigungsmittel (8) angeordnet sind, die mit dem jeweils darunter befindlichen Pflanzkasten (1.2 - 1.11) in einer kraft- und/oder formschlüssigen Verbindung stehen, so dass ein Verdrehen oder Verschieben zwischen direkt übereinander befindlichen Pflanzkästen (1.1, 1.2; 1.2, 1.3; usw.) in der jeweiligen Pflanzkastenebene verhindert wird und
- der unterste Pflanzkasten (1.n) auf einem Fuß (9) gelagert ist, **dadurch gekennzeichnet, dass** jeder Pflanzkasten (1.1 - 1.n) besteht aus beidseitig an den Kanalkanten (11) zur Bildung der Seitenwände (5) abgewinkelte trapezförmige Blechen (12),
wobei benachbarte Bleche (12) an den Seitenwänden (5) unter Bildung des Kanals (6) miteinander verbunden sind und
die Verbindung der Außenkanten der Seitenwände (5) durch den Mantel (2) gebildet ist.

2. Pflanzkastenturm nach Anspruch 1, **dadurch gekennzeichnet, dass**
bei einer formschlüssigen Verbindung der Seitewände (5) benachbarter Segmente (3.0/3.1, 3.1/3.2, 3.2/3.3, 3.3/3.0) diese durch eine Steckverbindung hergestellt ist, bestehend aus einer Außenfalz der Oberkante (5.1) der einen Seitenfläche (5) und einer Außenfalz der Unterkante (5.2) der anderen Seitenfläche (5), wobei bevorzugt die Falz jeweils durch eine Biegung der jeweiligen Kante im 180° gebildet ist, und der gerade Teil der jeweiligen anderen Seitenfläche (5) in die Falz greift.

3. Pflanzkastensystem nach Anspruch 2, **dadurch gekennzeichnet, dass**
die Falzhöhe (h) an der Unterkante (5.2) höher ist als an der Oberkante (5.1).

4. Pflanzkastensystem nach einem der Ansprüche 1 bis 3, **dadurch gekennzeichnet, dass**
zu Sicherungszwecken ein lösbarer Sicherungsstift (15) zwischen den zusammengefügten Seitenwänden (5) angeordnet ist.

5. Pflanzkastensystem nach einem der Ansprüche 2 bis 4, **dadurch gekennzeichnet, dass**
die Falz der Unterkante (5.2) eine oder mehrere Unterbrechungen aufweist für die Anordnung einer Auflage des Bodens (4) eines Segmentes (3.0 - 3.3).

6. Pflanzkastensystem nach einem der Ansprüche 2 bis 5, **dadurch gekennzeichnet, dass**
die Länge der Falz der Oberkante (5.1) der Länge der Oberkante (5.1) der Seitenfläche (5) entspricht, wobei entsprechend der Mantelneigung das um 180° umgebogene Teil der Falz im Mantelbereich vor dem Biegen angeschrägt wird, vorzugsweise mit einer Schräge (16) ≥ Mantelneigung).

7. Pflanzkastenturm nach einem der Ansprüche 1 bis 6, **dadurch gekennzeichnet, dass**
der Umfang des Kanals (6) sich vom oberen Pflanzkasten (1.1) zum unteren Pflanzkasten (1.n) hin vergrößert, vorzugsweise in ähnlicher oder gleicher Proportion wie sich der Außenumfang der Pflanzkästen (1.0 - 1.n) verändert.

8. Pflanzkastenturm nach einem der Ansprüche 1 bis 7, **dadurch gekennzeichnet, dass**
die Höhe des Bleches (12) und damit die Kanalhöhe und die Höhe der Seitenwände (5) niedriger ist als die Pflanzkastenhöhe, so dass jeder Pflanzkasten (1.1 - 1.n-1) in den darunterliegenden hineinragt.

9. Pflanzkastenturm nach einem der Ansprüche 1 bis 8, **dadurch gekennzeichnet, dass**
der Innenraum der Kanäle (6) mit einem wasserspeicherndem Material verfüllt ist, das so eine abgestufte, durchgehende Säule mit vorzugsweise nach unten größer werdendem Umfang bildet.

10. Pflanzkastenturm nach einem der Ansprüche 1 bis 8, **dadurch gekennzeichnet, dass**
die Anordnung eines oder mehrerer Tanks im Innenraum eines oder mehrerer Kanäle (6) oder deren Ausbildung als Tank zum Zwecke der Wasserversorgung vorgesehen ist.

11. Pflanzkastenturm nach einem der Ansprüche 1 bis 10, **dadurch gekennzeichnet, dass**
die Bleche (12) im Kanalbereich Öffnungen (7) zum Wasserdurchtritt aufweisen.

12. Pflanzkastenturm nach einem der Anspruch 1 oder 11, **dadurch gekennzeichnet, dass**
vom Fuß (9) durch die Kanäle (6) bis über den Kanal (6) des oberen Pflanzkastens (1.1) hinaus ein Tragseil, ein Tragrohr oder ein Tragblechstreifen (10) geführt ist, der oder das oben eine Oese zum Krantransport aufweist.

13. Pflanzkastenturm nach einem der Ansprüche 1 bis 12, **dadurch gekennzeichnet, dass**
der Fuß (9) ein oder mehrere nach oben weisende Befestigungselemente (14) aufweist, die in den Kanal (6) des Pflanzkastens (1.n) von unten eingreifen und so dessen Verdrehen oder Verschieben gegenüber der Ebene des Fußes (9) verhindern.

14. Pflanzkastenturm nach einem der Ansprüche 1 bis 13, **dadurch gekennzeichnet, dass**
der Fuß (9) palettenartig ausgebildet ist mit Eingriffstaschen (13) für die Gabeln eines Gabelstaplers.

## Claims

1. Planter box tower, consisting of:
- stacked planter boxes (1.1 - 1.n) with a downwardly tapering cross-section due to an inclined line of the casing (2) of the planter box (1.0 - 1.n), wherein each planter box (1.0 - 1.n) is subdivided into upwardly open segments (3.0 - 3.3),
- each segment (3.0 - 3.3) has a bottom (4) and the side walls (5) of the segments (3.0 - 3.3) connect a channel (6) to the respective casing (2) of the planter box (1.0 - 1.n), said channel (6) being centrically arranged within the planter box (1.1 - 1.n) and running from bottom to top,
- the bottom (4) and/or the side walls (5) have openings (7) that allow water to penetrate,
- fastening means (8) are arranged in the bottom region of one or more segments (3.0 - 3.3), said fastening means (8) being in frictional connection and/or form closure with the respective lower planter box (1.2 - 1.11), so that planter boxes (1.1, 1.2; 1.2, 1.3; etc.) that are disposed directly on top of each other are prevented from twisting or slipping relative to each other in the respective planter box plane, and
- the lowest planter box (1.n) is supported on a base (9), **characterized in that**
each planter box (1.1 - 1.n) consists of trapezoidal metal sheets (12) that are angled on both sides at the channel edges (11) for forming the side walls (5),
wherein adjacent metal sheets (12) are connected to each other at the side walls (5) while forming the channel (6), and
the connection between the outer edges of the side walls (5) is formed by the casing (2).

2. Planter box tower according to claim 1,
**characterized in that**
in case of a form closure of the side walls (5) of adjacent segments (3.0/3.1, 3.1/3.2, 3.2/3.3, 3.3/3.0), said form closure is provided by a plug-in connection, consisting of an outer fold of the upper edge (5.1) of one side face (5) and an outer fold of the lower edge (5.2) of the other side face (5), wherein, preferably, the fold is formed by a 180° bend of the respective edge in each case and the straight part of the respective other side face (5) engages the fold.

3. Planter box system according to claim 2,
**characterized in that**
the fold height (h) at the lower edge (5.2) is bigger than that at the upper edge (5.1).

4. Planter box system according to any one of claims 1 to 3,
**characterized in that**
a releasable locking pin (15) is arranged between the joined side walls (5) for purposes of locking.

5. Planter box system according to any one of claims 2 to 4,
**characterized in that**
the fold of the lower edge (5.2) has one or more gaps for the arrangement of a rest of the bottom (4) of a segment (3.0 - 3.3).

6. Planter box system according to any one of claims 2 to 5,
**characterized in that**
the length of the fold of the upper edge (5.1) corresponds to the length of the upper edge (5.1) of the side face (5), wherein, corresponding to the inclination of the casing, the part of the fold that is reversed by 180° is provided with a pitch in the casing region prior to bending, preferably with a pitch (16) ≥ inclination of the casing.

7. Planter box tower according to any one of claims 1 to 6,
**characterized in that**
the perimeter of the channel (6) increases from the upper planter box (1.1) to the lower planter box (1.n), preferably in a similar or the same proportion as the outer periphery of the planter boxes (1.0 - 1.n) changes.

8. Planter box tower according to any one of claims 1 to 7,
**characterized in that**
the height of the metal sheet (12), and thus the channel height and the height of the side walls (5), is lower than the planter box height, so that each planter box (1.1 - 1.n-1) extends into the respective lower one.

9. Planter box tower according to any one of claims 1 to 8,
**characterized in that**
the interior of the channels (6) is filled with a water-storing material that so forms a stepped and continuous column, whose perimeter preferably increases in the downward direction.

10. Planter box tower according to any one of claims 1 to 8,
**characterized in that**
the arrangement of one or more tanks in the interior of one or more channels (6) or their formation as a tank is provided for the purpose of water supply.

11. Planter box tower according to any one of claims 1 to 10,
**characterized in that**
in the channel region, the metal sheets (12) have openings (7) that allow water to penetrate.

12. Planter box tower according to any one of claims 1 or 11,
**characterized in that**
a carrying rope, a carrying tube or a carrying metal-sheet strip (10) that has an eye for crane transport at its top is led from the base (9) through the channels (6) beyond the channel (6) of the upper planter box (1.1).

13. Planter box tower according to any one of claims 1 to 12,
**characterized in that**
the base (9) has one or more upwardly extending fastening elements (14) that engage the channel (6) of the planter box (1.n) from below and so prevent it from twisting or slipping relative to the plane of the base (9).

14. Planter box tower according to any one of claims 1 to 13,
**characterized in that**
the base (9) has a pallet-like configuration with engagement recesses (13) for the forks of a fork lift truck.

## Revendications

1. Tour de bacs à plantes, composé
- de bacs à plantes (1.1 - 1.n) empilés les uns sur les autres, avec une section transversale qui se rétrécit vers le bas par une ligne, réalisée de façon inclinée, de l'enveloppe (2) du bac à plantes (1.0 - 1.n), chaque bac à plantes (1.0 - 1.n) étant divisé en segments (3.0 - 3.3) ouverts vers le haut,
- chaque segment (3.0 - 3.3) disposant d'un fond (4), et les parois latérales (5) des segments (3.0 - 3.3) raccordant un canal (6), orienté de bas en haut et disposé au milieu du bac à plantes (1.1 - 1.n), à chaque enveloppe (2) du bac à plantes (1.0 - 1.n),
- le fond (4) et/ou les parois latérales (5) présentant des ouvertures (7) pour le passage de l'eau,
- des moyens de fixation (8) étant disposés dans la zone de fond d'un ou de plusieurs segments (3.0 - 3.3) et étant en raccordement par friction ou mécanique avec le bac à plantes (1.2 - 1.11) qui se trouve respectivement au-dessous, de sorte qu'une torsion ou un déplacement entre des bacs à plantes (1.1, 1.2 ; 1.2, 1.3 ; etc.) qui se trouvent directement les uns au-dessus des autres est empêché(e) dans le plan respectif de bacs à plantes, et
- le bac à plantes le plus en bas (1.n) reposant sur un pied (9), **caractérisé en ce que**
chaque bac à plantes (1.1 - 1.n) se compose de tôles (12) trapézoïdales coudées des deux côtés sur les arêtes de canal (11) pour la formation des parois latérales (5),
des tôles (12) voisines étant raccordées les unes aux autres au niveau des parois latérales (5) en formant le canal (6) et
le raccordement des arêtes extérieures des parois latérales (5) étant formé par l'enveloppe (2).

2. Tour de bacs à plantes selon la revendication 1,
**caractérisé en ce que,**
en cas de raccordement mécanique des parois latérales (5) de segments voisins (3.0/3.1, 3.1/3.2, 3.2/3.3, 3.3/3.0), celui-ci est réalisé par un raccordement par emboîtement, composé d'une feuillure extérieure de l'arête supérieure (5.1) d'une surface latérale (5) et d'une feuillure extérieure de l'arête inférieure (5.2) de l'autre surface latérale (5), la feuillure étant de préférence formée respectivement par une flexion de l'arête respective à 180°, et la partie rectiligne de l'autre surface latérale (5) respective pénétrant dans la feuillure.

3. Système de bacs à plantes selon la revendication 2,
**caractérisé en ce que**
la hauteur de feuillure (h) est plus grande sur l'arête inférieure (5.2) que sur l'arête supérieure (5.1).

4. Système de bacs à plantes selon une des revendications 1 à 3,
**caractérisé en ce que,**
à des fins de blocage, une broche de blocage (15) détachable est disposée entre les parois latérales (5) assemblées.

5. Système de bacs à plantes selon une des revendications 2 à 4,
**caractérisé en ce que**
la feuillure de l'arête inférieure (5.2) présente une ou plusieurs interruptions pour la mise en place d'un appui du fond (4) d'un segment (3.0 - 3.3).

6. Système de bacs à plantes selon une des revendications 2 à 5,
**caractérisé en ce que**
la longueur de la feuillure de l'arête supérieure (5.1) correspond à la longueur de l'arête supérieure (5.1) de la surface latérale (5), la partie recourbée de 180° de la feuillure étant, conformément à l'inclinaison de l'enveloppe, chanfreinée dans la zone d'enveloppe avant la flexion, de préférence avec un chanfrein (16) (≥ inclinaison d'enveloppe).

7. Tour de bacs à plantes selon une des revendications 1 à 6,
**caractérisé en ce que**
la circonférence du canal (6) augmente depuis le bac à plantes supérieur (1.1) vers le bac à plantes inférieur (1.n), et de préférence de façon proportionnellement semblable ou identique à la variation de la circonférence extérieure des bacs à plantes (1.0 - 1.n).

8. Tour de bacs à plantes selon une des revendications 1 à 7,
**caractérisée en ce que**
la hauteur de la tôle (12), et donc la hauteur de canal et la hauteur des parois latérales (5), est plus faible que la hauteur de bacs à plantes de sorte que chaque bacs à plantes (1.1 - 1.n) dépasse à l'intérieur du bac à plantes situé au-dessous.

9. Tour de bacs à plantes selon une des revendications 1 à 8,
**caractérisé en ce que**
l'espace intérieur des canaux (6) est rempli d'un matériau accumulant l'eau qui forme ainsi une colonne continue étagée, avec de préférence une circonférence qui augmente vers le bas.

10. Tour de bacs à plantes selon une des revendications 1 à 8,
**caractérisé en ce que**
la disposition d'un ou de plusieurs réservoirs dans l'espace intérieur d'un ou de plusieurs canaux (6) ou leur configuration en tant que réservoir est prévue à des fins d'alimentation en eau.

11. Tour de bacs à plantes selon une des revendications 1 à 10,
**caractérisé en ce que**
les tôles (12) présentent dans la zone de canal des ouvertures (7) pour le passage de l'eau.

12. Tour de bacs à plantes selon la revendication 1 ou 11,
**caractérisé en ce que**
depuis le pied (9) à travers les canaux (6) jusqu'au-delà du canal (6) du bac à plantes supérieur (1.1), un câble porteur, un tube porteur ou une bande de tôle porteuse (10) est guidé(e), qui présente en haut un anneau pour le transport par grue.

13. Tour de bacs à plantes selon une des revendications 1 à 12,
**caractérisé en ce que**
le pied (9) présente un ou plusieurs éléments de fixation (14) dirigés vers le haut qui pénètrent par le bas dans le canal (6) du bac à plantes (1.n) et empêchent ainsi sa torsion ou son déplacement par rapport au plan du pied (9).

14. Tour de bacs à plantes selon une des revendications 1 à 13,
**caractérisé en ce que**
le pied (9) est constitué à la façon d'une palette, avec des poches d'insertion (13) pour les fourches d'un chariot à fourches.
